# EUROPEAN PATENT APPLICATION

(11) **EP 2 950 601 A1**
(43) Date of publication of application: **02.12.2015**
(21) Application number: 13872582.5
(22) Date of filing: 27.12.2013
(51) Int. Cl.: H04W 72/08

(54) **RANDOM ACCESS CHANNEL TRANSMISSION METHOD AND DEVICE**

(30) Priority: 28.01.2013 CN 201310031485
(71) Applicant: China Academy of Telecommunications Technology, Haidian District Beijing 100191 (CN)
(72) Inventor: XU, Weijie, Beijing 100191 (CN); JIA, Minli, Beijing 100191 (CN); XING, Yanping, Beijing 100191 (CN)
(74) Representative: Nony
(86) International application number: PCT/CN2013/090616
(87) International publication number: WO 2014/114167

(57) **Abstract**

Disclosed is a random access channel transmission method that is applicable at a terminal side. The method comprises: a terminal acquires a channel quality; the terminal determines, on the basis of a mapping relation between channel qualities and PRACH resources, a PRACH resource corresponding to the channel quality acquired; and, the terminal performs a PRACH transmission on the PRACH resource determined. Also disclosed are a random access channel transmission method that is applicable at a network side, a corresponding terminal device, and a corresponding base station. Employment of the present invention allows the terminal to select, on the basis of the channel quality of self, the corresponding random access channel resource for random access channel transmission.

## Description

This application claims the benefit of Chinese Patent Application No. 201310031485.6, filed with the State Intellectual Property Office of People's Republic of China on January 28, 2013 and entitled "Method and device for transmitting random access channel", which is hereby incorporated by reference in its entirety.

### Field

The present invention relates to the field of wireless communications and particularly to a method and device for transmitting a random access channel.

### Background

The Internet of Things is still going on, and a third-generation mobile communication system and a Long Term Evolution (LTE) system thereof are required to support Machine Type Communication (MTC).

Machine-to-Machine (M2M) communication which is a novel communication concept is intended to integrate various of communication technologies, e.g., machine to machine communication, machine-controlled communication, human-machine interactive communication, mobile Internet communication, etc., to thereby boost the development of social production and life styles. Human to human communication services are expected to account for only one third of the entire market of terminals in future, whereas a larger share of communication will emerge as machine to machine (lower-bandwidth system) communication services.

The existing mobile communication network is designed, for example, the determination of the network capacity, etc., for human to human communication. If it is expected to support lower-bandwidth system communication by using the mobile communication network, then the mechanism of the mobile communication system needs to be optimized in view of the characteristics of lower-bandwidth system communication for the purpose of better lower-bandwidth system communication with little or no influence upon traditional human-to-human communication.

Some currently identified characteristics of MTC communication may be as follows:
- Low mobility of an MTC terminal;
- The time in which the MTC terminal transmits data with the network side in a is controllable, that is, the MTC terminal can only access the network in a period of time specified by the network;
- The MTC terminal transmits data with the network side without any high real-time requirement, that is, with temporal tolerance;
- The MTC terminal is limited in energy and required to consume extremely low power;
- The MTC terminal only transmits a small data amount of information with the network side;
- The MTC terminal can be managed in a group; etc.

A real MTC terminal can have one or more of the characteristics above.

In the existing M2M network based upon the Global System of Mobile communication (GSM), an operator identifies that a terminal operating in some scenario, e.g., a terminal operating in a basement or a shopping mall or a corner of a building, may be unable to communicate with the network because a radio signal is seriously shielded so that the signal is greatly attenuated, but deep coverage by the network in the scenario may come with a significant increase in cost of deploying the network. As tests demonstrated, it has been generally recognized that the demand for coverage in the scenario might be satisfied only if existing coverage by the GSM were enhanced by 20dB. M2M transmission will be enabled with the later LTE technologies instead of the GSM, and since the LTE system is substantially equivalent in coverage to the GSM, required M2M transmission in the scenario will be accommodated also by enhancing coverage in the LTE system by 20dB.

In order to address the issue of coverage in M2M transmission, a potential straightforward and feasible solution is to transmit an existing physical channel repeatedly or the like, so that theoretically a coverage gain of 20dB may be achieved by repeatedly transmitting the existing physical channel 100 times.

For example, for a Physical Random Access Channel (PRACH), in order to achieve a coverage gain of 20dB, the terminal can repeatedly transmit the existing PRACH 100 times at resource positions specified by a base station; or the terminal can extend the existing PRACH format to thereby extend a sequence length of time in the PRACH to 100 times the existing format.

For coverage enhancement of a downlink synchronization channel, taking the periodically repeated transmission of the synchronization channel into account, the terminal can merge received downlink signals several times, tens of times or even hundreds of times to thereby enhance coverage of the synchronization channel.

In a random access procedure, the terminal firstly transmits Msg1, i.e., a preamble, which is an uplink message, carried over a PRACH, transmitted by the User Equipment (UE), i.e., the terminal, received by the evolution Node B (eNB), i.e., the base station. Before the Msg1 is transmitted, the eNB configures the preamble, and the PRACH channel resources over which the preamble is transmitted, and notifies the UE, camping on a cell, of a configuration result in a system message.

There are 64 preambles in total available in each cell, and the eNB can use a part or all of them for a contention random access. All the preambles for contention random access can be grouped selectively by the eNB into two groups, which are referred to as a group A and a group B. When a random access is triggered, the UE firstly determines the group of preambles according to the size of Msg3 to be transmitted, and a path loss, where the group B is used in a scenario where the Msg3 is large and the path loss is low, and the group A is used in a scenario where the Msg3 is small or the path loss is low, and the UE is notified of a Msg3 size threshold and a path loss threshold in the system message. The UE randomly selects and transmits one of the preambles after determining the group of preambles. If the eNB allocates all the preambles in the cell to the group A, that is, there is no group B, then the UE randomly selects and transmits one of the preambles in the group A directly.

After searching for a cell and reading a broadcast and system information, the UE can obtain configuration information of a downlink Common Reference Signal (CRS) or a downlink Channel State Information-Reference Signal (CSI-RS) and further measure and obtain channel quality information including path loss, Channel Quality Indicator (CQI) and other information. However in the existing mechanism where the path loss information of the UE is obtained using the groups of preambles, the base station can only obtain the path loss information according to the group in which the preamble transmitted by the UE lies, upon reception of the PRACH to thereby substantially obtain the channel quality information of the UE. However the eNB can not know the channel quality information before the preamble (carried over the PRACH) is transmitted, and the eNB has been unable so far to obtain the information at that time, so the eNB side has no knowledge of the channel quality information of the terminal at this time, so that the eNB configures the UE with the PRACH resources taking into account a UE under the poorest channel coverage condition, that is, if there is coverage enhancement by 20dB required for the UE under the poorest condition, then theoretically the size of the PRACH resource will be 100 times the existing resource (for example, the resource is repeated 100 times in the time domain here), so on one hand, there will be an evitable significant waste of resources for a UE with a better channel quality; and on the other hand, a capacity of the random access will be degraded seriously. Given the same total size of the occupied PRACH resource, the capacity will drop to 1% of the original capacity, thus making it very difficult to accommodate a demand for the PRACH channel capacity in the random accesses in the communication with a large number of M2M terminals.

### Summary

Embodiments of the invention provide a method and device for transmitting a random access channel so that a terminal selects a corresponding random access channel resource to transmit a random access channel, according to a channel quality of the terminal.

An embodiment of the invention provides a method for transmitting a random access channel, the method including:
obtaining, by a terminal, a channel quality;
determining, by the terminal, a Physical Random Access Channel, PRACH, resource corresponding to the obtained channel quality according to a mapping relationship of channel qualities to PRACH resources; and
transmitting, by the terminal the PRACH over the determined PRACH resource.

Another embodiment of the invention provides a method for transmitting a random access channel, the method including:
allocating, by a base station, corresponding Physical Random Access Channel, PRACH, resources for a terminal under different channel quality conditions according to a mapping relationship of channel qualities to PRACH resources; and
detecting, by the base station, a PRACH transmitted by the terminal over the PRACH resources, allocated for the terminal, corresponding to the respective channel qualities, and determining a channel quality of the terminal according to a PRACH resource occupied by the detected PRACH, and the mapping relationship of channel qualities to PRACH resources.

An embodiment of the invention provides a terminal device including:
an obtaining module configured to obtain a channel quality;
a random access resource determining module configured to determine a Physical Random Access Channel, PRACH, resource corresponding to the obtained channel quality according to a mapping relationship of channel qualities to PRACH resources; and
a transmitting module configured to transmit a PRACH over the determined PRACH resource.

An embodiment of the invention provides a base station device including:
an allocating module configured to allocate corresponding Physical Random Access Channel, PRACH, resources for a terminal under different channel quality conditions according to a mapping relationship of channel qualities to PRACH resources;
a detecting module configured to detect a PRACH transmitted by the terminal over the PRACH resources, allocated for the terminal, corresponding to the respective channel qualities; and
a channel quality determining module configured to determine a channel quality of the terminal according to a PRACH resource occupied by the detected PRACH, and the mapping relationship of channel qualities to PRACH resources.

Another embodiment of the invention provides a terminal device including:
a first processor configured to obtain a channel quality; and to determine a Physical Random Access Channel, PRACH, resource corresponding to the obtained channel quality according to a mapping relationship of channel qualities to PRACH resources; and
a first transceiver configured to transmit a PRACH over the determined PRACH resource.

Another embodiment of the invention provides a base station device including:
a second processor configured to allocate corresponding Physical Random Access Channel, PRACH, resources for a terminal under different channel quality conditions according to a mapping relationship of channel qualities to PRACH resources;
a second transceiver configured to detect a PRACH transmitted by the terminal over the PRACH resources, allocated for the terminal, corresponding to the respective channel qualities; and
wherein the second processor is further configured to determine a channel quality of the terminal according to a PRACH resource occupied by the detected PRACH, and the mapping relationship of channel qualities to PRACH resources.

In the embodiments above of the invention, the terminal can determine a PRACH resource corresponding to the channel quality of the terminal to transmit a PRACH, based upon the channel quality of the terminal to thereby lower an overhead of PRACH resources and improve a capacity of PRACHs.

### Brief Description of the Drawings

The drawings below illustrate only some examples of the technical solutions of the invention, but the invention will not be limited to the features illustrated in the drawing in which like reference numerals represent like elements and in which:
Fig.1 illustrates a schematic flow chart of processing by a terminal when a PRACH is transmitted according to an embodiment of the invention;
Fig.2 illustrates a schematic flow chart of processing by a base station when a PRACH is transmitted according to an embodiment of the invention;
Fig.3 illustrates a schematic structural diagram of a terminal device according to an embodiment of the invention;
Fig.4 illustrates a schematic structural diagram of a base station device according to an embodiment of the invention;
Fig.5 illustrates a schematic structural diagram of another terminal device according to an embodiment of the invention; and
Fig.6 illustrates a schematic structural diagram of another base station device according to an embodiment of the invention.

### Detailed Description of the Embodiments

The solutions according to the invention will be set forth below in the description of several representative embodiments thereof for the sake of conciseness and clarity of the description. Numerous details in the embodiments are merely intended to facilitate understanding of the solutions according to the invention. However apparently the technical solutions of the invention can be practiced without being limited to these details. In order not to unnecessarily obscure the solutions of the invention, they will not be described in details but outlined in some embodiments. In the following, "include" refers to "include but will not be limited to", and "according to ..." refers to "at least, but not limited to, according to ...". If the number of elements is not particularly stated in the following due to the language custom of Chinese, then there may be one or more or at least one such an element.

The embodiments of the invention provide a solution to transmission of a random access channel. In the embodiments of the invention, the network side allocates a different PRACH resource corresponding to a different channel quality of a terminal, and the terminal can select the corresponding random access channel for an access according to the channel quality of the terminal.

In the embodiments of the invention, a mapping relationship of channel qualities of the terminal to PRACH resources over which the terminal transmits a random access preamble needs to be created in advance, where the terminal transmitting a PRACH can select a PRACH resource according to the mapping relationship, and the network side can determine a channel quality of the terminal according to the mapping relationship.

Firstly the mapping relationship and how to create it will be described in details below.

The mapping relationship of channel qualities of the terminal to PRACH resources can be prescribed between the network and the terminal, for example, the mapping relationship can be specified in a protocol. Alternatively the terminal can be notified by a network-side device of the mapping relationship in a broadcast or SIB (system information).

For a terminal in a machine to machine communication scenario, the terminal is located typically at a fixed position and limited in coverage typically due to noise, and a channel quality of the terminal is poor typically due to shielding or another invariable factor, so the channel quality of such a terminal can remain in an interval of value for a period of time. The channel information of the terminal in a period of time can also be smoothed and filtered.

A channel quality of the terminal can be assigned with a channel quality level according to a channel quality interval in which the channel quality of the terminal lies, for example, the channel quality level can be assigned according to Signal to Noise Ratio (SNR) measured by the terminal. For different channel quality levels, also different coverage enhancements are needed, and the channel also needs to be transmitted repeatedly for different times. Table 1 depicts a possible example, although merely the example is given here, and particular values, the particular number of levels, particular intervals, etc., can be determined in accordance with specific conditions.

**Table 1**

| channel quality level of the terminal | SNR interval (dB) | Required coverage enhancement (dB) | The number of repeated transmissions |
|---|---|---|---|
| 1 | SNR>=-5dB | 0 | 1 (no repeat is required) |
| 2 | SNR<-5 and SNR>=-10 | 5 | 4 |
| 3 | SNR<-10 and SNR>=- 5 | 10 | 10 |
| 4 | SNR<-15 and SNR>=-20 | 15 | 32 |
| 5 | SNR<-20 and SNR>=-25 | 20 | 100 |

The PRACH resource can include one or any combination of a frequency position, a time domain position, and a time domain resource length. Different channel quality levels can correspond to different PRACH resources particularly as follows:
- PRACH resources corresponding to different channel quality levels occupy different frequency positions;
- PRACH resources corresponding to different channel quality levels occupy different time domain positions; and
- PRACH resources corresponding to different channel quality levels occupy different time domain resource lengths including duration lengths of a PRACH format or the numbers of times that the PRACH format is repeated.

For example, PRACH resources corresponding to different channel quality levels occupy different frequency positions, and there are also different PRACH lengths at the different frequency positions; or PRACH resources corresponding to different channel quality levels occupy the same frequency position but different time domain positions, i.e., in the time-division mode.

Here PRACH resources corresponding to different channel quality levels in the time-division mode particularly refers to that terminals with different channel quality levels occupies PRACH resources with different lengths of time (the number of sub-frames or radio frames in which PRACHs with enhanced coverage are transmitted or the number of times that the existing PRACH format is transmitted repeatedly), so that a terminal with a higher channel quality occupies a PRACH resource with a shorter duration, and a terminal with a lower channel quality occupies a PRACH resource with a longer duration.

Terminals with different channel quality levels can further operate over different frequency resources in the time-division mode. In this way, the number of PRACH resources can be increased to thereby further low a delay in a random access of the terminal.

The network can configure the numbers of PRACH resources for terminals with different channel quality levels according to statistics of the channel qualities of the terminal in a cell. If there are a high proportion of terminals in a certain channel quality interval, then more PRACH resources will be allocated to these terminals accordingly.

The following codes present a particular implementation in which configuration information of an enhanced PRACH channel is signaled in higher-layer signaling, where PRACH channels with different lengths of time operates in the time-division mode. Particularly PRACH-Config information elements in the higher-layer signaling (system message) include the following contents:

```
    -- ASN1START
    PRACH-ConfigSIB::= SEQUENCE {
         rootSequenceIndex INTEGER (0..837),
        prach-ConfigInfo PRACH-ConfigInfo
    }
    PRACH-Config ::= SEQUENCE {
        rootSequenceIndex INTEGER (0..837),
            prach-ConfigInfo PRACH-ConfigInfo
     OPTIONAL -- Need ON
    }
    PRACH-ConfigSCell-r10 ::= SEQUENCE {
        prach-ConfigIndex-r10 INTEGER (0..63)
    }
    PRACH-ConfgInfo ::= SEQUENCE {
        prach-ConfigIndex INTEGER (0..63),
        highSpeedFlag BOOLEAN,
        zeroCorrelationZoneConfig INTEGER (0..15),
        prach-FreqOffset INTEGER (0..94)
    enhancedPrach-period ENUMERATED{rf128, rf256,rf512, rf1024,rf2048},
    enhancedPrachList ::= SEQUENCE (SIZE (1..maxenhancedPrachNum))OF enhancedPrach
    enhancedPrach ::= SEQUENCE{
    enhancedPrach-length ENUMERATED {rf8, rf16, rf32, rf64,rf128}
    enhancedPrach-StartFrameOffset INTEGER (0..1024},
    enhancedPrach_CQI_threshold_max CQI_threshold_max
    enhancedPrach_CQI_threshold_min CQI_threshold_min
    }
    }
    -- ASN1STOP
```

Here PRACH channels with different lengths of time operate in the time-division mode in a single cycle with enhancedPrach-period being the cycle. The lengths of time of the respective PRACH channels are enhancedPrach-length, and positional offsets of the respective PRACH channels in the cycle are enhancedPrach-StartFrameOffset. In this example, a CQI interval of terminals corresponding to the group of PRACH channels is signaled in a system message as enhancedPrach_CQI_threshold_min,enhancedPrach_CQI_threshold_max. The parameter maxenhancedPrachNum represents the number of PRACH channels.

The following codes present another particular implementation in which configuration information of an enhanced PRACH channel is signaled in higher-layer signaling, where a plurality of groups of PRACH channels occupy different frequencies. Particularly PRACH-Config information elements in the higher-layer signaling (system message) include the following contents:

```
    -- ASN1START
    PRACH-ConfigSIB ::= SEQUENCE {
        rootSequenceIndex INTEGER (0..837),
        prach-ConfigInfo PRACH-ConfigInfo
    }
    PRACH-Config ::= SEQUENCE {
        rootSequenceIndex INTEGER (0..837),
            prach-ConfigInfo PRACH-ConfigInfo
    OPTIONAL -- Need ON
    }
    PRACH-ConfigSCell-r10 ::= SEQUENCE {
        prach-ConfigIndex-r10 INTEGER (0..63)
    }
    PRACH-ConfigInfo ::= SEQUENCE {
        prach-ConfigIndex INTEGER (0..63),
        highSpeedFlag BOOLEAN,
        zeroCorrelationZoneConfig INTEGER (0..15),
        prach-FreqOffset INTEGER (0..94)
    enhancedPrach-period ENUMERATED {rf128,rf256, rf512, rf1024,rf2048},
    enhancedPrachList ::= SEQUENCE (SIZE (1..maxenhancedPrachNum))OF enhancedPrach
    enhancedPrach ::= SEQUENCE {
    enhancedPrach-length ENUMERATED {rf8, rf16, rf32, rf64,rf128}
    enhancedPrach-FrequencyIndex INTEGER (1.. maxenhancedPrachNum),
    enhancedPrach_CQI_threshold_max CQI_threshold_max
    enhancedPrach_CQI threshold_min CQI_threshold_min
    }
    }
```

Here PRACH channels with different lengths of time operate in the time-division mode in a single cycle with enhancedPrach-period being the cycle. The lengths of time of the respective PRACH channels are enhancedPrach-length, and frequency positions of the respective PRACH channels are enhancedPrach-FrequencyIndex. In this example, a CQI interval of terminals corresponding to the group of PRACH channels is signaled in a system message as enhancedPrach_CQI_threshold_min,enhancedPrach_CQI_threshold_max. The parameter maxenhancedPrachNum represents the number of PRACH channels.

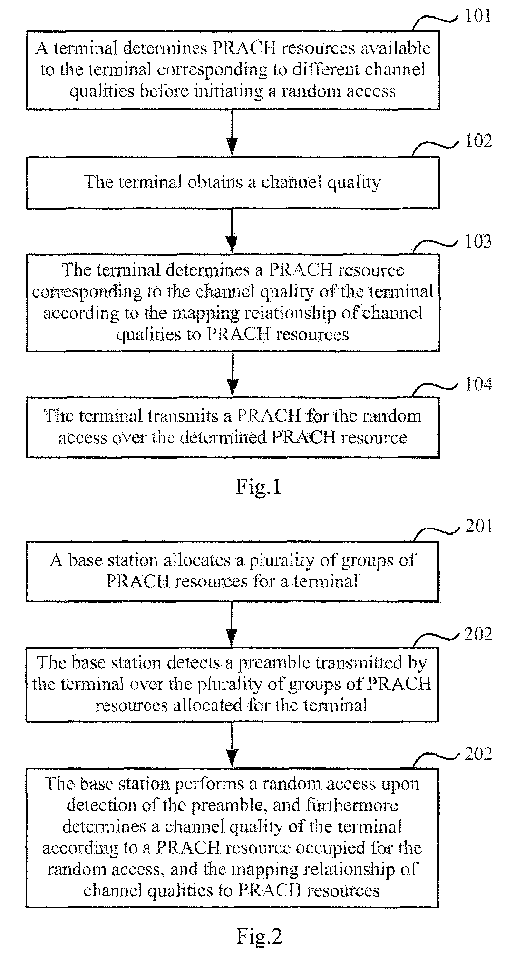

Based upon the mapping relationship of the channel quality to the PRACH resource, a PRACH is transmitted according to the embodiments of the invention as follow:
Referring to Fig.1, there is illustrated a schematic flow chart of processing at the terminal side in a flow of transmitting a PRACH according to an embodiment of the invention, and as illustrated, the flow can include:
   Operation 101: A terminal determines PRACH resources available to the terminal corresponding to different channel qualities before initiating a random access.

In this operation, if a mapping relationship of channel qualities to PRACH resources is specified in a protocol, then the terminal can determine the PRACH resources corresponding to the different channel qualities according to the protocol; and if the mapping relationship of channel qualities to PRACH resources is notified by a network-side device to the terminal by broadcasting system information (particular contents of the message can be as illustrated in the codes above), then the terminal can obtain the PRACH resources corresponding to the different channel qualities from the system broadcast.

Operation 102: The terminal obtains a channel quality.

Particularly the terminal can measure the channel quality based upon a CRS or a CSI-RS or can determine the channel quality according to the number of times that a Primary Synchronization Signal (PSS), a Secondary Synchronization Signal (SSS), is merged as required for obtaining the synchronization by the terminal in a downlink synchronization procedure or can determine the channel quality according to the number of times that a PBCH is merged as required for obtaining MIB information correctly, or the number of times that an attempt is made on demodulating the PBCH or can determine the channel quality according to the number of times that a PDSCH, over which SIB1 information is carried, is merged as required for receiving the SIB1 information correctly, or the number of times an attempt is made on demodulating the PDSCH.

If the mapping relationship of channel qualities to PRACH resources is set in the form of channel quality levels, then the terminal can further quantize information about the channel quality upon obtaining the channel quality to thereby obtain a corresponding channel quality level.

Operation 103: The terminal determines a PRACH resource corresponding to the channel quality of the terminal according to the mapping relationship of channel qualities to PRACH resources.

Operation 104: The terminal transmits a PRACH for the random access over the determined PRACH resource.

Referring to Fig.2, there is illustrated a schematic flow chart of processing at the network side in a flow of transmitting a PRACH according to an embodiment of the invention, and as illustrated, the flow can include:

Operation 201: A base station allocates at least two groups of PRACH resources for a terminal.

Particularly the base station allocates corresponding PRACH resources for the terminal under different channel quality conditions according to a mapping relationship of channel qualities to PRACH resources, for example, if there are five levels of channel qualities, then the base station allocates five groups of PRACH resources corresponding to the five levels for the terminal, so that the different channel qualities correspond to different PRACH resources, and reference can be made to the description above for details thereof, so a repeated description thereof will be omitted here.

Operation 202: The base station detects a preamble transmitted by the terminal over the PRACH resource allocated for the terminal.

Operation 203: The base station performs a random access of the terminal according to the detected preamble upon detection of the preamble, and furthermore the base station can determine a channel quality of the terminal according to a PRACH resource occupied for the random access, and the mapping relationship of channel qualities to PRACH resources. Channel qualities of respective terminals obtained by the base station can be used in subsequent transmission of a control channel or a data channel so that the network-side device can perform appropriate repeated transmission according to the channel quality to thereby satisfy a coverage demand and improve the utilization ratio of system spectrums.

As can be apparent from the description above, the network side pre-configures the resources of the random access channel according to the channel qualities so that the terminal can select the corresponding random access channel resource for an access according to the really measured channel quality, so on one hand, the PRACH transmission of the terminals with the different channel qualities can adopt an appropriate repeat times or be in an appropriate PRACH format to thereby lower an overhead of the PRACH resources while satisfying the PRACH coverage enhancement so as to improve the capacity of PRACHs; and on the other hand, the network side can be notified implicitly of the real channel quality of the terminal for subsequent transmission of the control channel or the data channel to thereby enable the repeated transmission to be performed appropriately according to the channel quality so as to satisfy the coverage demand and improve the utilization ratio of system spectrums.

Based upon the same technical idea, an embodiment of the invention further provides a corresponding terminal device and base station device.

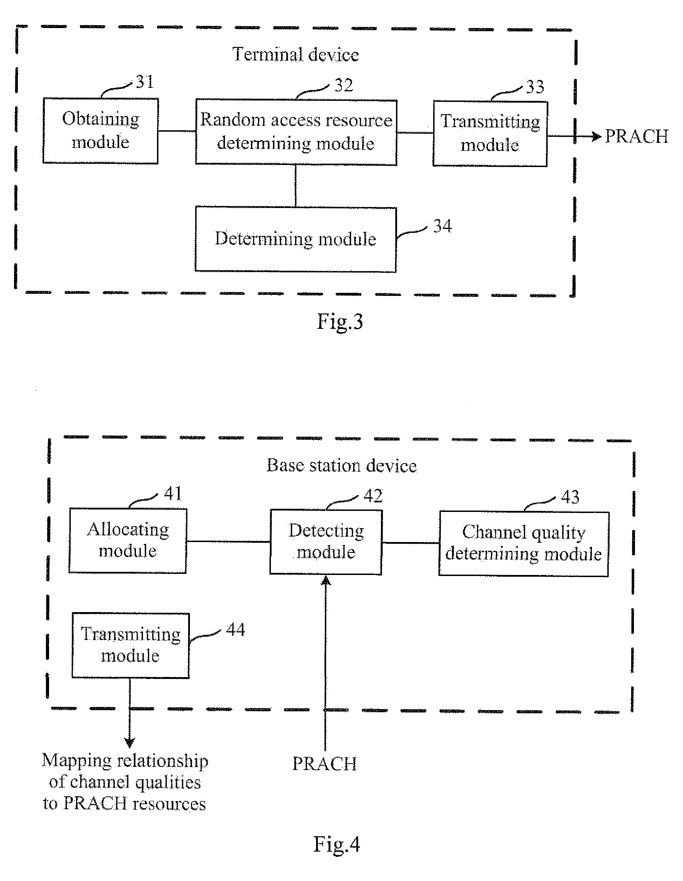

Referring to Fig.3, there is illustrated a schematic structural diagram of a terminal device according to an embodiment of the invention. As illustrated, the terminal device can include an obtaining module 31, a random access resource determining module 32, and a transmitting module 33, and can further include a determining module 34, where:

The obtaining module 31 is configured to obtain a channel quality;
The random access resource determining module 32 is configured to determine a PRACH resource corresponding to the obtained channel quality according to a mapping relationship of channel qualities to PRACH resources; and
The transmitting module 33 is configured to transmit a PRACH over the determined PRACH resource.

Particularly the PRACH resources include one or combination of:
- Frequency domain positions of PRACHs, where PRACH resources corresponding to different channel qualities occupy different frequency positions;
- Time domain positions of PRACHs, where PRACH resources corresponding to different channel qualities occupy different time domain positions; and
- Time domain resource lengths of PRACHs, where PRACH resources corresponding to different channel qualities occupy different time domain resource lengths including duration lengths of a PRACH format or the numbers of times that the PRACH format is repeated.

Particularly the determining module 34 is configured to determine the mapping relationship of channel qualities to PRACH resources as prescribed in a protocol or to determine the mapping relationship of channel qualities to PRACH resources according to system information broadcast by a network device.

Particularly the obtaining module 31 is configured to measure the channel quality based upon a CRS or a CSI-RS, or to determine the channel quality according to the number of times that a PSS signal or an SSS signal is merged, as required for obtaining synchronization by the terminal in a downlink synchronization procedure, or to determine the channel quality according to the number of times that a PBCH is merged as required for obtaining MIB information correctly, or the number of times that an attempt is made on demodulating the PBCH, or to determine the channel quality according to the number of times that a PDSCH, over which SIB1 information is carried, is merged as required for receiving the SIB1 information correctly, or the number of times an attempt is made on demodulating the PDSCH.

Referring to Fig.4, there is illustrated a schematic structural diagram of a base station device according to an embodiment of the invention, and as illustrated, the base station device can include an allocating module 41, a detecting module 42, and a channel quality determining module 43, and further a transmitting module 44, where:
The allocating module 41 is configured to allocate corresponding PRACH resources for a terminal under different channel quality conditions according to a mapping relationship of channel qualities to PRACH resources;
The detecting module 42 is configured to detect a PRACH transmitted by the terminal over the PRACH resources, allocated for the terminal, corresponding to the respective channel qualities; and
The channel quality determining module 43 is configured to determine a channel quality of the terminal according to a PRACH resource occupied by the detected PRACH, and the mapping relationship of channel qualities to PRACH resources.

Particularly the PRACH resources include one or combination of:
- Frequency domain positions of PRACHs, where PRACH resources corresponding to different channel qualities occupy different frequency positions;
- Time domain positions of PRACHs, where PRACH resources corresponding to different channel qualities occupy different temporal positions; and
- Time domain resource lengths of PRACHs, where PRACH resources corresponding to different channel qualities occupy different time domain resource lengths including duration lengths of a PRACH format or the numbers of times that the PRACH format is repeated.

Particularly among the PRACH resources corresponding to the different channel qualities, a time domain resource length occupied by a PRACH resource corresponding to a higher channel quality is less than a time domain resource length occupied by a PRACH resource corresponding to a lower channel quality.

Particularly the mapping relationship of channel qualities to PRACH resources is prescribed in a protocol.

Particularly the transmitting module 44 is configured to transmit the mapping relationship of channel qualities to PRACH resources to the terminal in a system broadcast.

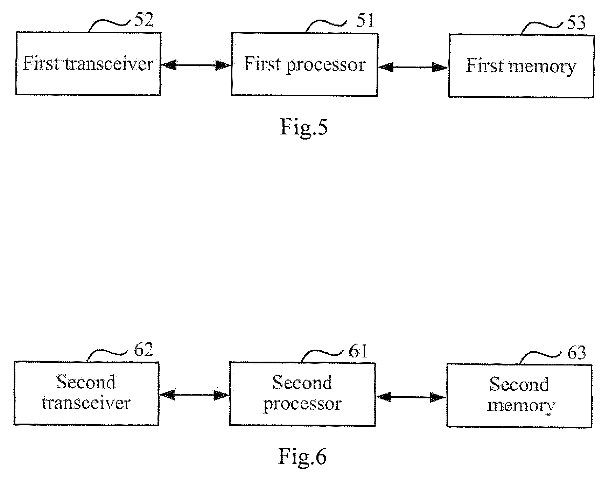

Referring to Fig.5, there is illustrated a schematic structural diagram of another terminal device according to an embodiment of the invention. As illustrated, the terminal device can include a first processor 51 and a first transceiver 52 and further a first memory, where:
The first processor 51 is configured to obtain a channel quality; and to determine a Physical Random Access Channel (PRACH) resource corresponding to the obtained channel quality according to a mapping relationship of channel qualities to PRACH resources; and
The first transceiver 52 is configured to transmit a PRACH over the determined PRACH resource.

Particularly the PRACH resources include one or combination of:
- Frequency domain positions of PRACHs, where PRACH resources corresponding to different channel qualities occupy different frequency positions;
- Time domain positions of PRACHs, where PRACH resources corresponding to different channel qualities occupy different temporal positions; and
- Time domain resource lengths of PRACHs, where PRACH resources corresponding to different channel qualities occupy different time domain resource lengths including duration lengths of a PRACH format or the numbers of times that the PRACH format is repeated.

Particularly the first memory 53 is configured to store the mapping relationship, of channel qualities and PRACH resources, prescribed in a protocol, and to provide the first processor 51 with the mapping relationship; or
The first processor 51 is configured to determine the mapping relationship of channel qualities to PRACH resources according to system information broadcast by a network device.

Particularly the first processor 51 is configured:
To measure the channel quality based upon a Common Reference Signal (CRS) or a Channel State Information-Reference Signal (CSI-RS), or
To determine the channel quality according to the number of times that a Primary Synchronization Signal (PSS) signal or a Secondary Synchronization Signal (SSS) signal, is merged as required for obtaining synchronization by the terminal in a downlink synchronization procedure, or
To determine the channel quality according to the number of times that a PBCH is merged as required for obtaining MIB information correctly, or the number of times that an attempt is made on demodulating the PBCH, or
To determine the channel quality according to the number of times that a PDSCH, over which SIB 1 information is carried, is merged as required for receiving the SIB 1 information correctly, or the number of times an attempt is made on demodulating the PDSCH.

Referring to Fig.6, there is illustrated a schematic structural diagram of another base station device according to an embodiment of the invention, and as illustrated, the base station device can include a second processor 61 and a second transceiver 62, and further a second memory 63, where:
The second processor 61 is configured to allocate corresponding Physical Random Access Channel (PRACH) resources for a terminal under different channel quality conditions according to a mapping relationship of channel qualities to PRACH resources;
The second transceiver 62 is configured to detect a PRACH transmitted by the terminal over the PRACH resources, allocated for the terminal, corresponding to the respective channel qualities; and
The second processor 61 is further configured to determine a channel quality of the terminal according to a PRACH resource occupied by the detected PRACH, and the mapping relationship of channel qualities to PRACH resources.

Particularly the PRACH resources include one or combination of:
- Frequency domain positions of PRACHs, where PRACH resources corresponding to different channel qualities occupy different frequency positions;
- Time domain positions of PRACHs, where PRACH resources corresponding to different channel qualities occupy different time domain positions; and
- Time domain resource lengths of PRACHs, where PRACH resources corresponding to different channel qualities occupy different time domain resource lengths including duration lengths of a PRACH format or the numbers of times that the PRACH format is repeated.

Particularly among the PRACH resources corresponding to the different channel qualities, a time domain resource length occupied by a PRACH resource corresponding to a higher channel quality is less than a time domain resource length occupied by a PRACH resource corresponding to a lower channel quality.

Particularly the second memory 63 is configured to store the mapping relationship, of channel qualities and PRACH resources, prescribed in a protocol, and to provide the second processor 61 with the mapping relationship.

Particularly the second transceiver 62 is further configured to transmit the mapping relationship of channel qualities to PRACH resources to the terminal in a system broadcast.

In summary, with the technology according to the embodiments of the invention, the terminal can select the PRACH resource with a different duration length to transmit the random access channel, according to the channel condition of the terminal, so that on one hand, the network side can detect the channel resource over which the terminal transmits the PRACH to obtain the channel quality information of the terminal so as to provide a reference for setting the number of repeat or a code rate required for transmitting data and a control channel in subsequent communication with the terminal, and on the other hand, the PRACH resources can be saved significantly and the capacity of PRACHs can be guaranteed for the terminal with a better channel quality. Furthermore the delay in a random access of the terminal can be further lowered when the PRACH resources further operate in the time-division mode in addition to a frequency division mode.

Those skilled in the art can clearly appreciate from the foregoing description of the embodiments that the invention can be embodied in software plus a necessary general hardware platform or, of course, in hardware, although the former implementation may be preferred in many cases. Based upon such understanding, the technical solutions of the invention in essence or the part thereof contributing to the prior art can be embodied in the form of a software product, which can be stored in a storage medium, and which includes several instructions to cause a terminal device (e.g., a handset, a personal computer, a server, a network device, etc.) to perform the methods according to the respective embodiments of the invention.

It shall be noted that not all the steps and modules in the respective flows and the respective structural diagrams above will necessarily be required, but some of the steps or the modules may be omitted as needed in practice. The order in which the respective steps are performed are not fixed but may be altered as needed. The devices have been functionally into the respective modules merely for the sake of a convenient description thereof, but in a real implementation, one of the modules can be embodied by a plurality of modules, and the functions of more than one of the modules may be performed by the same module; and these modules may be located in the same device or may be located in different devices. Moreover the terms "first", "second", etc., in the description above are merely intended to facilitate distinguishing two objects with the same definition from each other but will not suggest their any substantive difference from each other.

The hardware modules in the respective embodiments can be embodied mechanically or electrically. For example, a hardware module can include a specifically designed permanent circuit or logic device (e.g., a dedicated processor including an FPGA or an ASIC) configured to perform particular operations. The hardware module can also include a programmable logic device or circuit (including a general-purpose processor or another programmable processor) temporarily configured in software to perform particular operations. The hardware module being embodied mechanically or in a dedicated permanent circuit or in a circuit temporarily configured (e.g., configured in software) can be decided particularly taking time and cost factors into account.

The invention further provides a machine readable storage medium storing thereon instructions configured to cause a machine to perform the methods as described in this context. Particularly a system or a device can be provided with a storage medium storing thereon software program codes configured to perform the functions in any one of the embodiments above, and a computer (or a CPU or an MPU) of the system or the device can be caused to read and execute the program codes stored in the storage medium. Moreover a part or all of the real operations can be performed by an operating system running on the computer based upon the instructions of the program codes. The program codes read from the storage medium can be written into a memory arranged in an expansion board inserted into the computer or written into a memory arranged in an expansion unit connected with the computer, and thereafter a part or all of the real operations can be performed by a CPU installed on the expansion board or the expansion unit based upon the instructions of the program codes, thereby performing the functions in any one of the embodiments above.

Embodiments of the storage medium configured to provide the program codes include a floppy disk, a hard disk, an optic-magnetic disk, an optical disk (e.g., a CD-ROM, a CD-R, a CD-RW, a DVD-ROM, a DVD-RAM, a DVD-RW, a DVD+RW, etc.), a magnetic tape, a nonvolatile memory card, an ROM, etc. Optionally the program codes can be downloaded from a server computer over a communication network.

In summary, the scope of the claims shall not be limited to the embodiments described above, but the description shall be interpreted as a whole and accorded the broadest scope.

## Claims

1. A method for transmitting a random access channel, the method comprising:
obtaining, by a terminal, a channel quality;
determining, by the terminal, a Physical Random Access Channel, PRACH, resource corresponding to the obtained channel quality according to a mapping relationship of channel qualities to PRACH resources; and
transmitting, by the terminal the PRACH over the determined PRACH resource.

2. The method according to claim 1, wherein the PRACH resources comprise one or combination of:
frequency domain positions of PRACHs, wherein the PRACH resources corresponding to the different channel qualities occupy different frequency positions;
time domain positions of PRACHs, wherein the PRACH resources corresponding to the different channel qualities occupy different time domain positions; and
time domain resource lengths of PRACHs, wherein the PRACH resources corresponding to the different channel qualities occupy different time domain resource lengths comprising duration lengths of a PRACH format or the numbers of times that the PRACH format is repeated.

3. The method according to claim 1, wherein the mapping relationship of channel qualities to PRACH resources is prescribed in a protocol, or
the terminal obtains the mapping relationship of channel qualities to PRACH resources from system information broadcast by a network device.

4. The method according to claim 1, wherein obtaining, by the terminal, the channel quality comprises:
measuring, by the terminal, the channel quality based upon a Common Reference Signal, CRS, or a Channel State Information-Reference Signal, CSI-RS, or
determining the channel quality according to the number of times that a Primary Synchronization Signal, PSS, or a Secondary Synchronization Signal, SSS, is merged as required for obtaining synchronization by the terminal in a downlink synchronization procedure, or
determining the channel quality according to the number of times that a PBCH is merged as required for obtaining MIB information correctly, or the number of times that an attempt is made on demodulating the PBCH, or
determining the channel quality according to the number of times that a PDSCH, over which SIB1 information is carried, is merged as required for receiving the SIB1 information correctly, or the number of times an attempt is made on demodulating the PDSCH.

5. A method for transmitting a random access channel, the method comprising:
allocating, by a base station, corresponding Physical Random Access Channel, PRACH, resources for a terminal under different channel quality conditions according to a mapping relationship of channel qualities to PRACH resources; and
detecting, by the base station, a PRACH transmitted by the terminal over the PRACH resources, allocated for the terminal, corresponding to the respective channel qualities, and determining a channel quality of the terminal according to a PRACH resource occupied by the detected PRACH, and the mapping relationship of channel qualities to PRACH resources.

6. The method according to claim 5, wherein the PRACH resources comprise one or combination of:
frequency domain positions of PRACHs, wherein the PRACH resources corresponding to the different channel qualities occupy different frequency positions;
time domain positions of PRACHs, wherein the PRACH resources corresponding to the different channel qualities occupy different time domain positions; and
time domain resource lengths of PRACHs, wherein the PRACH resources corresponding to the different channel qualities occupy different time domain resource lengths comprising duration lengths of a PRACH format or the numbers of times that the PRACH format is repeated.

7. The method according to claim 6, wherein the PRACH resources corresponding to the different channel qualities occupying different time domain positions comprises:
among the PRACH resources corresponding to the different channel qualities, a time domain resource length occupied by a PRACH resource corresponding to a higher channel quality is less than a time domain resource length occupied by a PRACH resource corresponding to a lower channel quality.

8. The method according to claim 5, wherein the mapping relationship of channel qualities to PRACH resources is prescribed in a protocol, or
the base station transmits the mapping relationship of channel qualities to PRACH resources to the terminal in a system broadcast.

9. A terminal device, comprising:
an obtaining module configured to obtain a channel quality;
a random access resource determining module configured to determine a Physical Random Access Channel, PRACH, resource corresponding to the obtained channel quality according to a mapping relationship of channel qualities to PRACH resources; and
a transmitting module configured to transmit a PRACH over the determined PRACH resource.

10. The terminal device according to claim 9, wherein the PRACH resources comprise one or combination of:
frequency domain positions of PRACHs, wherein the PRACH resources corresponding to the different channel qualities occupy different frequency positions;
time domain positions of PRACHs, wherein the PRACH resources corresponding to the different channel qualities occupy different time domain positions; and
time domain resource lengths of PRACHs, wherein the PRACH resources corresponding to the different channel qualities occupy different time domain resource lengths comprising duration lengths of a PRACH format or the numbers of times that the PRACH format is repeated.

11. The terminal device according to claim 9, wherein the terminal device further comprises:
a determining module configured to determine the mapping relationship of channel qualities to PRACH resources as prescribed in a protocol or to determine the mapping relationship of channel qualities to PRACH resources according to system information broadcast by a network device.

12. The terminal device according to claim 9, wherein the obtaining module is configured:
to measure the channel quality based upon a Common Reference Signal, CRS, or a Channel State Information-Reference Signal, CSI-RS, or
to determine the channel quality according to the number of times that a Primary Synchronization Signal, PSS, or a Secondary Synchronization Signal, SSS, is merged as required for obtaining synchronization by the terminal in a downlink synchronization procedure, or
to determine the channel quality according to the number of times that a PBCH is merged as required for obtaining MIB information correctly, or the number of times that an attempt is made on demodulating the PBCH, or
to determine the channel quality according to the number of times that a PDSCH, over which SIB1 information is carried, is merged as required for receiving the SIB1 information correctly, or the number of times an attempt is made on demodulating the PDSCH.

13. A base station device, comprising:
an allocating module configured to allocate corresponding Physical Random Access Channel, PRACH, resources for a terminal under different channel quality conditions according to a mapping relationship of channel qualities to PRACH resources;
a detecting module configured to detect a PRACH transmitted by the terminal over the PRACH resources, allocated for the terminal, corresponding to the respective channel qualities; and
a channel quality determining module configured to determine a channel quality of the terminal according to a PRACH resource occupied by the detected PRACH, and the mapping relationship of channel qualities to PRACH resources.

14. The base station device according to claim 13, wherein the PRACH resources comprise one or combination of:
frequency domain positions of PRACHs, wherein the PRACH resources corresponding to the different channel qualities occupy different frequency positions;
time domain positions of PRACHs, wherein the PRACH resources corresponding to the different channel qualities occupy different time domain positions; and
time domain resource lengths of PRACHs, wherein the PRACH resources corresponding to the different channel qualities occupy different time domain resource lengths comprising duration lengths of a PRACH format or the numbers of times that the PRACH format is repeated.

15. The base station device according to claim 14, wherein among the PRACH resources corresponding to the different channel qualities, a time domain resource length occupied by a PRACH resource corresponding to a higher channel quality is less than a time domain resource length occupied by a PRACH resource corresponding to a lower channel quality.

16. The base station device according to claim 13, wherein the mapping relationship of channel qualities to PRACH resources is prescribed in a protocol.

17. The base station device according to claim 13, wherein the base station further comprises:
a transmitting module configured to transmit the mapping relationship of channel qualities to PRACH resources to the terminal in a system broadcast.

18. A terminal device, comprising:
a first processor configured to obtain a channel quality; and to determine a Physical Random Access Channel, PRACH, resource corresponding to the obtained channel quality according to a mapping relationship of channel qualities to PRACH resources; and
a first transceiver configured to transmit a PRACH over the determined PRACH resource.

19. The terminal device according to claim 18, wherein the PRACH resources comprise one or combination of:
frequency domain positions of PRACHs, wherein PRACH resources corresponding to different channel qualities occupy different frequency positions;
time domain positions of PRACHs, wherein PRACH resources corresponding to the different channel qualities occupy different temporal positions; and
time domain resource lengths of PRACHs, wherein the PRACH resources corresponding to the different channel qualities occupy different time domain resource lengths comprising duration lengths of a PRACH format or the numbers of times that the PRACH format is repeated.

20. The terminal device according to claim 18, wherein:
the terminal device further comprises a first memory configured to store the mapping relationship, of channel qualities and PRACH resources, prescribed in a protocol, and to provide the first processor with the mapping relationship; or
the first processor is further configured to determine the mapping relationship of channel qualities to PRACH resources according to system information broadcast by a network device.

21. The terminal device according to claim 18, wherein the first processor is configured:
to measure the channel quality based upon a Common Reference Signal, CRS, or a Channel State Information-Reference Signal, CSI-RS, or
to determine the channel quality according to the number of times that a Primary Synchronization Signal, PSS, or a Secondary Synchronization Signal, SSS, is merged as required for obtaining synchronization by the terminal in a downlink synchronization procedure, or
to determine the channel quality according to the number of times that a PBCH is merged as required for obtaining MIB information correctly, or the number of times that an attempt is made on demodulating the PBCH, or
to determine the channel quality according to the number of times that a PDSCH, over which SIB1 information is carried, is merged as required for receiving the SIB1 information correctly, or the number of times an attempt is made on demodulating the PDSCH.

22. A base station device, comprising:
a second processor configured to allocate corresponding Physical Random Access Channel, PRACH, resources for a terminal under different channel quality conditions according to a mapping relationship of channel qualities to PRACH resources;
a second transceiver configured to detect a PRACH transmitted by the terminal over the PRACH resources, allocated for the terminal, corresponding to the respective channel qualities; and
wherein the second processor is further configured to determine a channel quality of the terminal according to a PRACH resource occupied by the detected PRACH, and the mapping relationship of channel qualities to PRACH resources.

23. The base station device according to claim 22, wherein the PRACH resources comprise one or combination of:
frequency domain positions of PRACHs, wherein the PRACH resources corresponding to the different channel qualities occupy different frequency positions;
time domain positions of PRACHs, wherein the PRACH resources corresponding to the different channel qualities occupy different time domain positions; and
time domain resource lengths of PRACHs, wherein the PRACH resources corresponding to the different channel qualities occupy different time domain resource lengths comprising duration lengths of a PRACH format or the numbers of times that the PRACH format is repeated.

24. The base station device according to claim 23, wherein among the PRACH resources corresponding to the different channel qualities, a time domain resource length occupied by a PRACH resource corresponding to a higher channel quality is less than a time domain resource length occupied by a PRACH resource corresponding to a lower channel quality.

25. The base station device according to claim 22, wherein:
the base station further comprises a second memory configured to store the mapping relationship, of channel qualities and PRACH resources, prescribed in a protocol, and to provide the second processor with the mapping relationship.

26. The base station device according to claim 22, wherein:
the second transceiver is further configured to transmit the mapping relationship of channel qualities to PRACH resources to the terminal in a system broadcast.
